# EUROPÄISCHE PATENTSCHRIFT

(11) **EP 2 789 801 B1**
(45) Veröffentlichungstag und Bekanntmachung des Hinweises auf die Patenterteilung: **03.02.2016**
(21) Anmeldenummer: 14163956.7
(22) Anmeldetag: 09.04.2014
(51) Int. Cl.: F01D 9/02, F01D 25/26, F04D 29/42, F02B 37/013, F02B 37/02

(54) **Gehäuse eines Radialverdichters**
Housing of a radial compressor
Boîtier d'un compresseur centrifuge radial

(30) Priorität: 09.04.2013 EP 13162987
(43) Veröffentlichungstag der Anmeldung: 15.10.2014
(73) Patentinhaber: ABB Turbo Systems AG, 5400 Baden (CH)
(72) Erfinder: Mathey, Christoph, CH-5442 Filslisbach (CH); Schlienger, Joel, 8008 Zürich (CH); Baudisch, Olaf, 8400 Winterthur (CH); Aberle, Patrick, 5417 Untersiggenthal (CH)
(74) Vertreter: ABB Patent Attorneys

(56) Entgegenhaltungen:
- EP-A1- 2 050 940
- EP-A2- 2 267 285
- EP-A2- 2 386 761
- WO-A1-2012/098175
- DE-A1-102010 030 516

## Beschreibung

### Technisches Gebiet

Die Erfindung bezieht sich auf das Gebiet der aufgeladenen Verbrennungskraftmaschinen. Sie betrifft das Gehäuse eines vertikal angeordneten Radialverdichters, wie er beispielsweise in einem Abgasturbolader zur Aufladung von Verbrennungskraftmaschinen zu Anwendung kommt. Zudem betrifft die Erfindung einen Abgasturbolader sowie eine mehrstufige Aufladegruppe mit mehreren Abgasturboladern mit derartigen Verdichtergehäusen.

### Stand der Technik

Für die Leistungssteigerung einer Verbrennungskraftmaschine werden Abgasturbolader mit einem dem Motor vorgelagerten Verdichter und einer über eine gemeinsame Welle verbundenen Turbine im Abgastrakt der Verbrennungskraftmaschine eingesetzt. Mit der Aufladung eines Verbrennungsmotors wird die Luftmenge und somit auch die Kraftstoffmenge in den Zylindern erhöht und daraus ein merklicher Leistungsanstieg für den Motor gewonnen. Der dafür verwendete Abgasturbolader setzt sich standardmässig aus einem Rotor, bestehend aus Verdichterrad, Turbinenrad, Welle sowie der Wellenlagerung, den strömungsführenden Gehäuseteilen (Verdichtergehäuse resp. Turbinengehäuse) und dem Lagergehäuse zusammen.

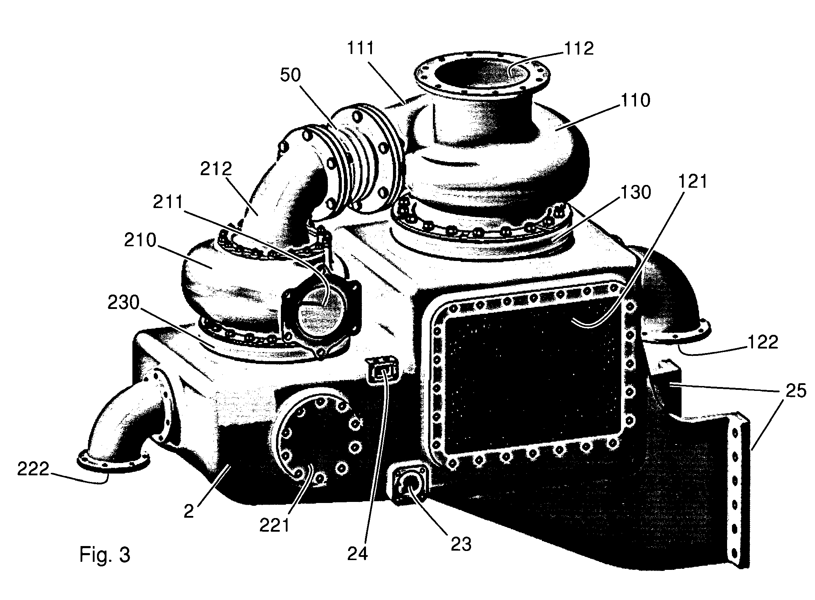

Üblicherweise werden Verbrennungsmotoren mit Abgasturboladern im 1-stufigen Verbund mit einem Turbolader pro Motorbank aufgeladen und damit Verdichterdruckverhältnisse von bis zu PIV=6 erreicht. Ein mögliches Anlageschema der 1-stufigen Aufladung ist in Abbildung 3 aufgezeigt. Für die neuere Generation von Verbrennungsmotoren wird das Druckverhältnis mittels 2-stufiger Aufladung auf bis zu PIV=12 und mehr gesteigert. Der Nutzen der 2-stufigen Aufladung liegt im Wesentlichen in einer deutlichen Reduktion der NOx Abgasemissionen, einer Erhöhung der Motorleistungsdichte sowie in der Erhöhung des Motorwirkungsgrades.

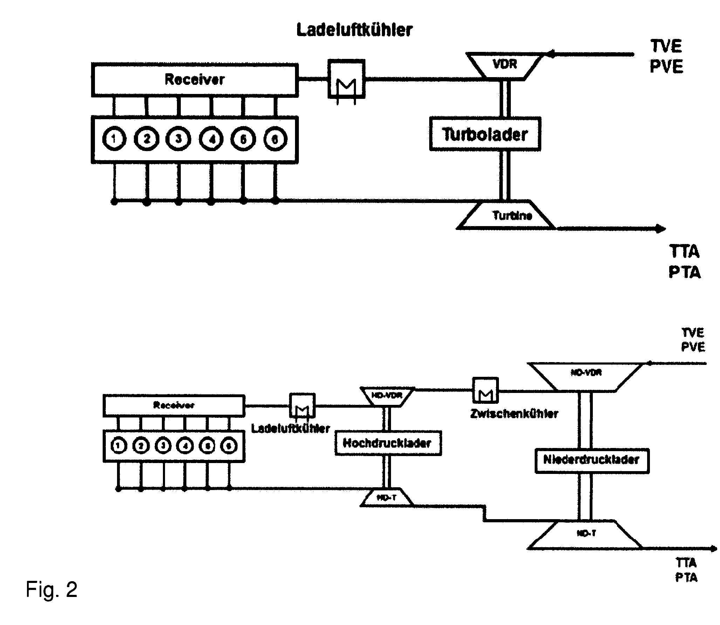

Das 2-stufige Aufladesystem setzt sich primär aus einem in Serie geschalteten Niederdruck- sowie Hochdruckturbolader und einem zusätzlichen Zwischenkühler zwischen den beiden Verdichterstufen zusammen. Ein mögliches Anlageschema der 2-stufigen Aufladung ist in Fig. 2 dem Anlageschema der 1-stufigen Aufladung gegenübergestellt. Durch die Zwischenkühlung wird weniger Verdichterarbeit für die Kompression einer vorgegebenen Luftmenge und Druckverhältnis benötigt, wodurch der Wirkungsgrad des Aufladesystems erhöht werden kann. Abschliessend wird die verdichtete Luft aus dem 2-stufigen Aufladesystem, analog dem 1-stufigen System, durch den Ladeluftkühler am Eintritt des Verbrennungsmotors gekühlt und in den Motor geführt.

Im Vergleich zum 1-stufigen System ist das Anbauvolumen eines 2-stufigen Aufladesystems auf einem Verbrennungsmotor mit den zusätzlichen Komponenten wesentlich komplexer und an sich voluminöser. Durch die konsequente Integration der erforderlichen Komponenten lässt sich dieses Bauvolumen jedoch reduzieren und das Aufladesystem kompakter gestalten.

Im Vergleich zum 1-stufigen System verdoppelt sich mit einem 2-stufigen Aufladesystem die Anzahl benötigter Turbolader und Kühleraggregate für einen Verbrennungsmotor, womit auch die Komplexität der Leitungsführungen sowie die Grösse des Anbaus auf dem Motor zunimmt. Insbesondere die Verbindungsleitungen zwischen den Verdichterstufen und dem Zwischenkühler sowie die zusätzliche Abgasleitung zwischen der Hochdruck- und Niederdruckturbinenstufe ist im Anbau zu integrieren.

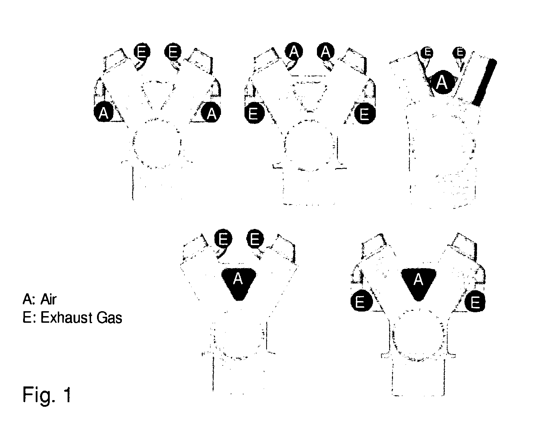

Das Anbaukonzept und die Leitungsführungen hängt stark von der jeweiligen Bauweise des Motors ab, da die Abgasleitungen teilweise seitlich am Motor respektive mittig zur Motorachse geführt werden. Die Lage der Frischluftzuleitungen ist ebenfalls von der Bauweise des Motors abhängig. Eine exemplarische Darstellung möglicher Anbausituationen für V-Motoren ist in Fig. 1 gezeigt. Die Anbausituation bei Reihenmotoren mit nur einer Motorbank entspricht an sich der Anbauhälfte eines V-Motors.

Die Hoch- und Niederdrucklader sind nun derart am Motor zu platzieren, dass die Abgasleitungen und Frischluftzuleitungen zwischen dem Aufladesystem und dem Motor sowie zwischen dem Aufladesystem und den Kühleraggregaten minimalste Baulängen und Bauvolumen aufweisen. Weiter ist darauf zu achten, dass die Strömungsführung in den Leitungen zu Gunsten geringer Strömungsverluste möglichst wenig Umlenkungen erfährt.

### Kurze Darstellung der Erfindung

Die Aufgabe der vorliegenden Erfindung besteht darin, das Gehäuse eines Radialverdichters zu optimieren.

Das erfindungsgemässe Gehäuse eines Radialverdichters umfasst eine einen Hohlraum umschliessende Gehäusehülle mit mehreren Seitenflächen sowie ein im Innern der Gehäusehülle angeordnetes Spiralgehäuse.

Das Spiralgehäuse weist eine zentralen, durchgehenden Öffnung auf. Diese Öffnung dient einerseits zur Aufnahme eines Verdichterrades, welches durch diese Öffnung in das Spiralgehäuse eingeschoben werden kann. Andererseits dient die zentrale Öffnung dem Zuführen von Luft aus dem das Spiralgehäuse umgebenden Hohlraum auf ein in dieser Öffnung angeordnetes Verdichterrad. Das Spiralgehäuse weist eine weitere Öffnung zum Abführen der Strömung aus dem Spiralgehäuse auf.

In eine der Seitenflächen der Gehäusehülle ist eine erste Öffnung zum Durchführen eines in dem Spiralgehäuse anzuordnenden Verdichterrades eingelassen. Weiter ist in ein der Seitenflächen der Gehäusehülle eine zweite Öffnung zum Abführen der aus dem Spiralgehäuse geführten Strömung aus der Gehäusehülle eingelassen. Und weiter ist in mindestens eine Seitenfläche der Gehäusehülle eine dritte Öffnung zum Zuführen von Luft in den Hohlraum im Innern der Gehäusehülle eingelassen.

Optional verläuft die durchgehende Öffnung im Spiralgehäuse in vertikaler Richtung und das Gehäuse ist folglich zur Aufnahme eines um eine vertikale Achse rotierenden Verdichters vorgesehen.

Optional teilen sich das Spiralgehäuse und die Gehäusehülle eine Seitenwand, wobei in diese gemeinsame Seitenwand die Öffnung zum Durchführen des Verdichterrades eingelassen ist. Somit mündet die zentrale, durchgehende Öffnung im Sprialgehäuse in diese Öffnung in der gemeinsamen Seitenwand.

Optional weist die Gehäusehülle mehrere dritte Öffnungen zum Zuführen von Luft in den Hohlraum im Innern der Gehäusehülle auf, welche optional in jeweils verschiedene Seitenflächen eingelassen sind. Diese Zuführungen können in Form eines Anschlussflansches zum Befestigen eines Luftzuführrohres oder in Form einer mit einem Filtergitter abgedeckten Öffnung vorgesehen sein. Optional lassen sich eine oder mehrere dieser mehreren dritten Öffnungen mit einem Deckel verschliessen.

Optional ist ein derartige Gehäuse eines Radialverdichters Teil einer Gehäusevorrichtung, wobei die Gehäusehülle von einem Gehäusemantel umgeben ist. Erfindungsgemäss erstreckt sich zwischen dem Gehäusemantel und der Gehäusehülle ein mit Flüssigkeit beaufschlagter Hohlraum. Die Öffnungen in der Gehäusehülle sind durch entsprechenden Öffnungen im Gehäusemantel aus dem Gehäusemantel hinausgeführt.

Optional sind mehrere derartige Gehäuse eines Radialverdichters Teil einer Gehäusevorrichtung, wobei die Gehäusehüllen gemeinsam von einem Gehäusemantel umgeben sind: Erfindungsgemäss erstreckt sich zwischen dem Gehäusemantel und den Gehäusehüllen ein mit Flüssigkeit beaufschlagter Hohlraum. Die Öffnungen in den Gehäusehüllen sind durch entsprechenden Öffnungen im Gehäusemantel aus dem Gehäusemantel hinausgeführt.

Derartige Gehäusevorrichtung finden Verwendung in Abgasturbolader, umfassend einen vertikal angeordneten Rotor mit einem Turbinenrad und einem Verdichterrad, wobei das Verdichterrad in der Gehäusevorrichtung angeordnet ist.

Optional wird bei einem derartigen Abgasturbolader Flüssigkeit, insbesondere Lageröl, aus einem Lagerbereich des Rotors in den Hohlraum zwischen dem Gehäusemantel und der Gehäusehülle geführt. Dabei läuft die Flüssigkeit aufgrund der Schwerkraft über die Gehäusehülle, oder, sofern das Spiralgehäuse in die obere Wand der Gehäusehülle integriert ist, über das Spiralgehäuse ab.

Option ist das Gehäuse der Turbine vertikal oberhalb des Gehäusemantels angeordnet. Dabei umschliesst erfindungsgemäss eine auf dem Gehäusemantel aufgesetzte, mehrteilige Isolierverschalung das Turbinengehäuse vollständig. Die Isolierverschalung gibt dabei eine Öffnung zum Zuführen der heissen Abgase und eine Öffnung zum Abführen der heissen Abgase frei.

Oben genannte Gehäusevorrichtungen finden Anwendung in einer Aufladegruppe, umfassend mehrere Abgasturbolader mit jeweils einem vertikal angeordneten Rotor mit jeweils einem Turbinenrad und einem Verdichterrad, wobei die mehreren Verdichterräder in jeweils einer Gehäusevorrichtung angeordnet sind.

Optional wird bei einem derartigen Abgasturbolader Flüssigkeit, insbesondere Lageröl, aus einem Lagerbereich der Rotoren in den Hohlraum zwischen dem Gehäusemantel und der Gehäusehüllen geführt. Dabei läuft die Flüssigkeit aufgrund der Schwerkraft über die jeweiligen Gehäusehüllen, oder, sofern die Spiralgehäuse jeweils in die obere Wand der Gehäusehüllen integriert sind, über die Spiralgehäuse ab.

Mehrere Abgasturbolader können zu einem mehrstufigen Aufladesystem geschaltet sein, wobei Verdichter und Turbine zweier, aufeinanderfolgender Stufen jeweils in Serie geschaltet sind, so dass die Turbine der höheren Stufe der Turbine der tieferen Stufe vorgeschaltet und der Verdichter der höheren Stufe dem Verdichter der tieferen Stufe nachgeschaltet ist.

Optional können mehrere Abgasturbolader parallel geschaltet werden. Dabei kann der Volumenstrom 1-stufig auf mehrere Lader verteilt und diese in einer erfindungsgemässen Gehäuseeinheit verbaut werden.

Optional sind bei einer Aufladegruppe die Gehäuse der Turbinen vertikal oberhalb des Gehäusemantels angeordnet. Dabei umschliesst eine auf dem Gehäusemantel aufgesetzte, mehrteilige Isolierverschalung die Turbinengehäuse vollständig. Die Isolierverschalung gibt eine Öffnung zum Zuführen der heissen Abgase auf die Turbinenstufen und eine Öffnung zum Abführen der Abgase nach dem Durchlaufen der Turbinenstufen frei.

Option weist der Gehäusemantel eines Abgasturboladers oder einer Aufladegruppe einen Befestigungsflansch zur Befestigung des Abgasturboladers beziehungsweise der Aufladegruppe an einer Brennkraftmaschine auf.

Die erfindungsgemässe Ausbildung des Verdichtergehäuses eines Radialverdichters erlaubt bei einem 2- oder mehrstufigen Aufladesystem dank Integration mehrerer Gehäuseteile in eine Gehäuseeinheit einen Anbau am Motor mit wenig Bauraum und einfacher Montage/ Demontage. Die Vertikalanordnung der Rotorblöcke erleichtert den Zugang für die Serviceleute.

Weitere Vorteile ergeben sich aus den abhängigen Ansprüchen.

### Kurze Beschreibung der Zeichnungen

Anschliessend sind anhand der Zeichnungen Ausführungsformen des erfindungsgemässen Verdichtergehäuses erläutert. Hierbei zeigt
- Fig. 1: schematisch mögliche Anbausituationen der Abgasleitungen (E für Exhaust Gas) und Frischluftzuleitungen (A für Air) bei V-Motoren,
- Fig. 2: die Anlageschema von 1-stufiger Aufladung und 2-stufiger Aufladung,
- Fig. 3: eine isometrische Ansicht einer zweistufige Abgasturbolader-Anordnung mit einem erfindungsgemässen Verdichtergehäuse,

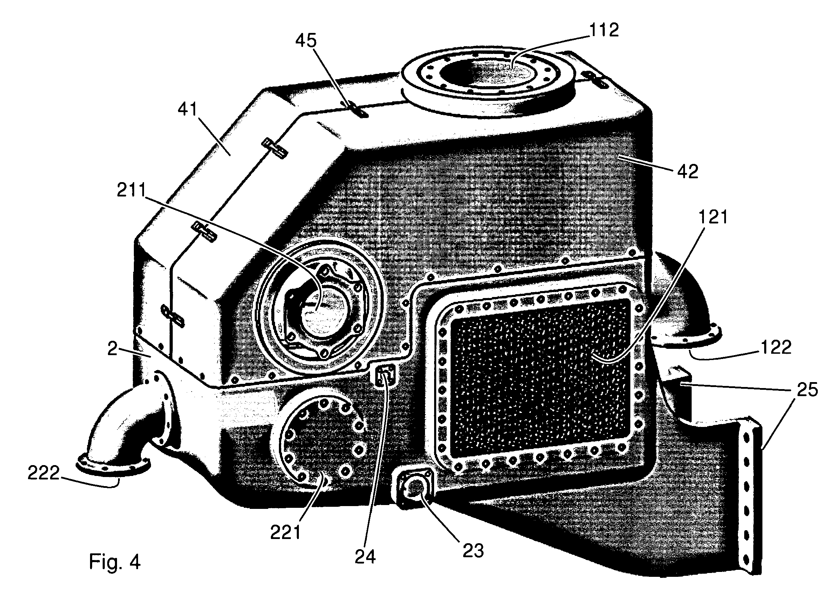

- Fig. 4: die zweistufige Abgasturbolader-Anordnung nach Fig. 3 mit aufgesetzter Isolationsverschalung,

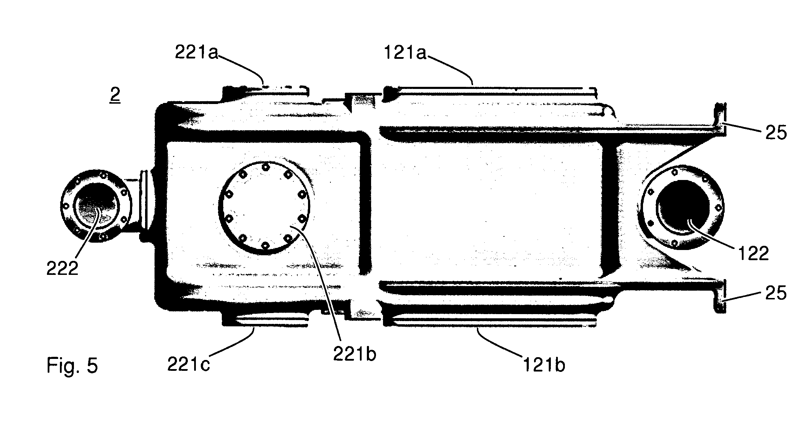

- Fig. 5: eine Ansicht von Unten der zweistufigen Abgasturbolader-Anordnung nach Fig. 3,
- Fig. 6: eine isometrische Ansicht des erfindungsgemässen Verdichtergehäuses der zweistufigen Abgasturbolader-Anordnung nach Fig. 3,

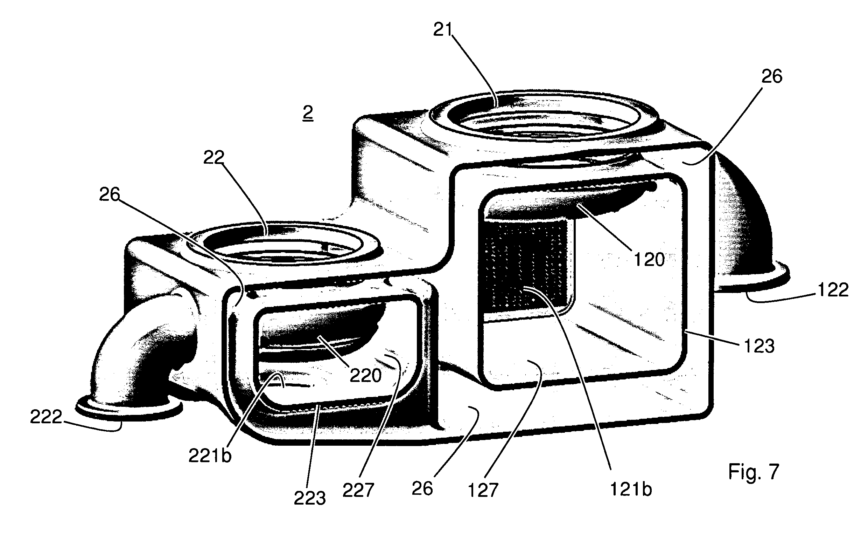

- Fig. 7: das aufgeschnittene Verdichtergehäuse nach Fig. 6, wobei der Schnitt ausserhalb der Spiralgehäuse geführt ist,

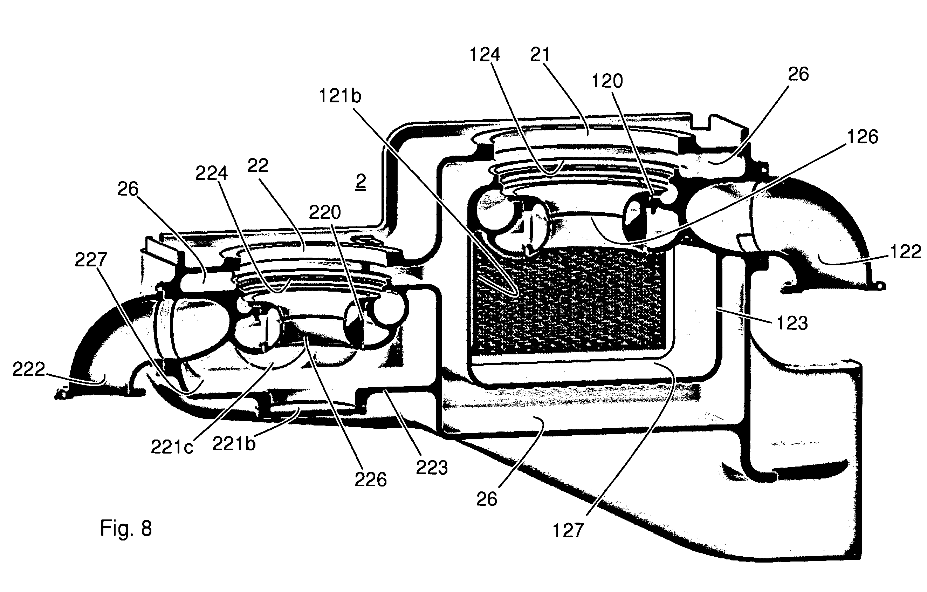

- Fig. 8: das aufgeschnittene Verdichtergehäuse nach Fig. 6 (mit zusätzlichem Befestigungsflansch), wobei der Schnitt durch die Spiralgehäuse, und zwar in etwa durch die vertikale Achse durch die koaxialen Öffnungen zur Aufnahme der Verdichterräder, geführt ist,
- Fig. 9: ein entlang der vertikal verlaufenden Wellenachsen der beiden Abgasturbolader geführter Schnitt durch die zweistufige Abgasturbolader-Anordnung nach Fig. 3.

### Weg zur Ausführung der Erfindung

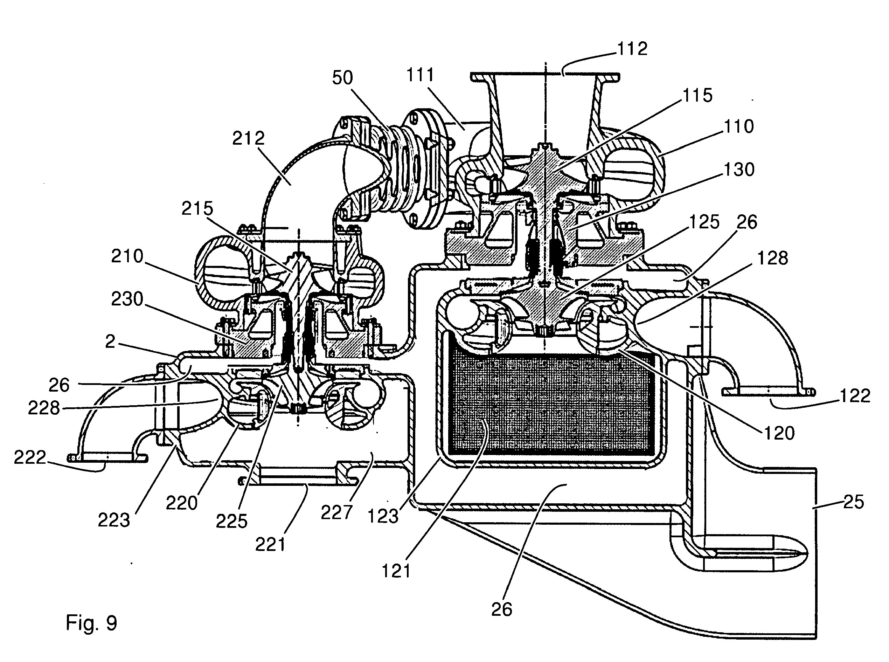

Anhand des Hochdruck-Turboladers (jeweils links in den Figuren, etwa im Schnittbild in Fig. 9) wird der grundsätzliche Aufbau des erfindungsgemässen Anordnung beschrieben. Das Verdichtergehäuse umfasst das Spiralgehäuse 220 (120 im Niederdrucklader), welches grundsätzlich selber noch mehrteilig ausgebildet sein kann. Das Spiralgehäuse umfasst den spiralförmigen Sammelraum der im verdichteten Luft und begrenzt zusammen mit der Nabe des in der zentralen Öffnung 226 (126) des Spiralgehäuses angeordneten Verdichterrades 225 (125) den Strömungskanal im Bereich des Verdichterrades. Für die Strömung weist das Spiralgehäuse zwei Öffnungen auf, im Ansaugbereich die erwähnte, zentrale Öffnung 226 (126) und am Ende der Spirale eine Austrittsöffnung 228 (128) zum Abführen der Strömung aus dem Spiralgehäuse.

Das Spiralgehäuse ist im Innern einer Gehäusehülle 223 (123) angeordnet, wobei die Gehäusehülle einen Hohlraum 227 (127) umschliesst, welcher als Sammelraum für den Lufteintritt dient. Das Ende der Spirale ist aus der Gehäusehülle hinausgeführt und mündet in den Luftaustritt 222 (122). Der Lufteintritt des Spiralgehäuses, also die zentrale, durchführende Öffnung 226 (126) mündet in den Hohlraum 227 (127). Die Luftzufuhr in den Hohlraum im Innern der Gehäusehülle erfolgt über Öffnungen 221 (121) in einer Seitenfläche der Gehäusehülle. Dabei kann ein Luftansaugstutzen zur Verbindung mit den Zufuhröffnungen in der Gehäusehülle vorgesehen sein, oder, wie im Falle des Niederdruckladers, eine Filtermatte mit zusätzlicher Schalldämmfunktion die Zufuhröffnung abdecken. Die Gehäusehülle weist mehrere Seitenflächen auf. Die Gehäusehülle kann würfel- oder quaderförmig sein, oder ganz allgemein ein Polyeder, mit eckigen oder abgerundeten Kanten. Weist die Gehäusehülle mehrere Seitenflächen auf, können auch mehrere Lufteintrittsöffnungen in die Seitenflächen eingelassen werden. Die zusätzliche Fläche ermöglicht eine Verteilung der Zuströmung, was zu einer geringeren Lärmentwicklung führt, was insbesondere am Niederdruck-Lufteintritt interessant ist. In den Figuren sind die mehreren Lufteintrittsöffnungen mit 221 a, 221 b, 221 c, bzw. 121 a und 121b bezeichnet. Optional lassen sich überzählige Lufteintrittsöffnungen mit einem Deckel abschliessen. Die Abdeckung kann auch beim Transport und im Servicefall vorteilhaft sein, um Verschmutzung zu verhindern.

Die aus dem Anlageschema gemäss Fig. 2 bekannten Ladeluft-Kühlereinheiten (nicht dargestellt) befänden sich unterhalb des Gehäusemantels 2.

Erfindungsgemäss ist die Gehäusehülle 223 (123) in einem äusseren Gehäusemantel angeordnet. Im Zwischenraum zwischen der Gehäusehülle und dem Gehäusemantel erstreckt sich eine Hohlraum 26, welcher an der tiefsten Stelle in einen Ölaustritt 23 mündet. In diesem Hohlraum ist im Betrieb der Aufladevorrichtung eine Flüssigkeit vorgesehen, welche insbesondere der Kühlung des Spiralgehäuses dienen soll. Wie in den Figuren dargestellt, ist hierzu das Spiralgehäuse an der oberen Gehäusewand der Gehäusehülle angeordnet, so dass sich Spiralgehäuse und Gehäusehülle die Rückwand teilen. Fliesst nun eine Flüssigkeit über diese Rückwand, wird das Spiralgehäuse gekühlt.

Die Flüssigkeit stammt vorteilhafterweise aus dem Lagerölkreislauf. Diese Flüssigkeit wird benutzt, um die Lagerung der Turboladerwelle zu kühlen. In der Fig. 9 sind zur Lagerung keine Details ersichtlich. Der vertikal angeordnete Rotor ist jedoch mit einem entsprechend grossen Axiallager ausgestattet, um die in Achsrichtung wirkende Gewichtskraft aufzunehmen, zusätzlich zur Schubbelastung im Betrieb. Wie im Schnittbild angedeutet ist, erstreckt sich der Hohlraum 26 bis in den Lagerbereich im Rotorblock. Vorteilhaft bei dieser Ausführung ist die mit dem vertikal gerichteten Ölabfluss einhergehenden Kühlung des Spiralgehäuses, wodurch eine zusätzliche Kühlwirkung auf die zu verdichtende Luft in der Verdichterstufe erreicht wird. Dank dieser zusätzlichen Kühlwirkung kann sich der verdichterseitige Wirkungsgrad des Aufladesystems verbessern.

Die Ölabflusskanäle werden über Dichtungen zwischen den verschiedenen Gehäuseteilen abgedichtet.

Der Rotorblock setzt sich aus dem Verdichterrad 225 (125), dem Turbinenrad 215 (115), der die beiden Räder verbindenden Welle und dem Lagergehäuse 230 (130) zusammen. Im Servicefall kann der Rotorblock als Einheit aus dem Verdichergehäuse gehoben werden, nachdem das Turbinengehäuse 210 (110) entfernt worden ist. Das Turbinengehäuse 210 (110) ist über eine Laschenverbindung mit dem Lagergehäuse 230 (130) und dem Gehäusemantel 2 zur Einstellung unterschiedlicher Winkellagen des Gaseintritts (Hochdruck-Lader-seitig) drehbar verschraubt. Das Turbinengehäuse ist vertikal oberhalb des Gehäusemantels 2 angeordnet. Es setzt sich aus dem Gaseintritt 211 (111) und dem Gasaustritt 212 (112) zusammen. Im Bereich des Turbinenrades umschliesst das Turbinengehäuse 210 (110) ebenfalls einen spiralförmigen Strömungskanal sowie eine Leitvorrichtung zum Ausrichten der Strömung auf die Laufschaufeln des radial angeströmten Turbinenrades. Da es aufgrund unterschiedlicher Gastemperaturen zwischen den Turbinen des Hochdruck- und des Niederdruckladers zu unterschiedlicher Ausdehnung der Gehäuse kommen kann, ist die Verbindung zwischen Gasaustritt 212 der Turbine des Hochdruck-Laders und Gaseintritt 111 der Turbine des Niederdruck-Laders mit einem Kompensatorelement 50 realisiert.

Der Gehäusemantel 2, die Gehäusehüllen 223 und 123 sowie die Spiralgehäuse 220 und 120 können als ein einteiliges Gusselement hergestellt sein. Dadurch reduziert sich die Anzahl benötigter Bauteile für eine derartige Aufladevorrichtung. Dank der Lufteintrittsöffnungen auf mehreren Seiten können mit einem Gusselement mehrere Anbauvarianten realisiert werden. Nicht benötigte Anschlüsse werden einfach mit einem Deckel abgedeckt. Die Luftaustrittsleitung aus dem Niederdruckverdichter sowie Luftaustrittsleitung aus dem Hochdruckverdichter sind ebenfalls in die Gehäuseeinheit integriert, oder zumindest daran befestigt.

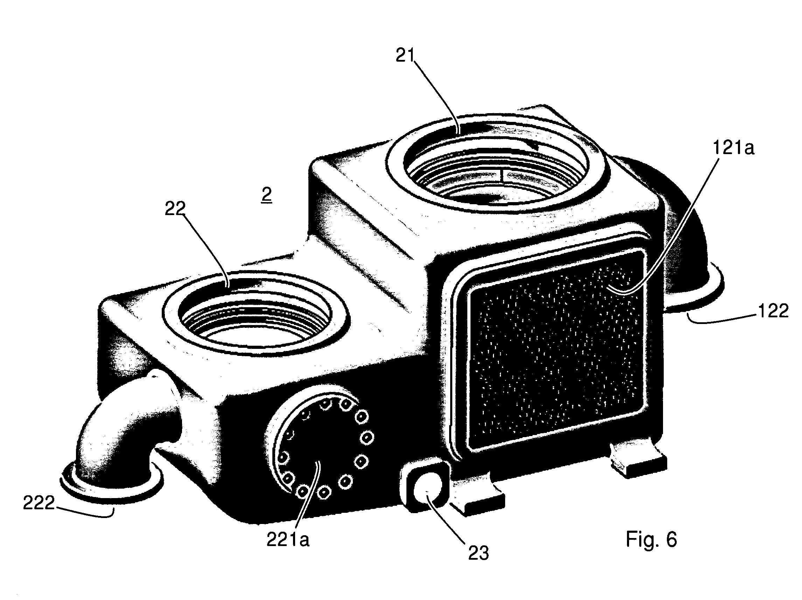

Am Gehäusemantel 2 ist ein Befestigungsflansch 25 angeordnet, welcher der Befestigung der ganzen Einheit an der Motorkonsole dient. Der Befestigungsflansch kann dabei eine horizontale Auflagefläche für die Montage von Oben auf der Motorkonsole aufweisen (Fig. 6), oder, wie in den übrigen Figuren, eine vertikale Auflagefläche für eine seitliche Montage an der Motorkonsole.

Die Hochdruck- und Niederdruckturbolader können konzeptionell grundsätzlich gleich aufgebaut sein und unterscheiden sich allenfalls aus thermodynamischen Gründen in der Baugrösse sowie den rotierenden Komponenten, wie z.B. dem Verdichterrad oder der Turbine.

Das erfindungsgemässe Verdichtergehäuse-Konzept wurde anhand der in den Figuren dargestellten, 2-stufigen Aufladeeinheit im Detail erläutert. Genausogut kann das erfindungsgemässe Verdichtergehäusekonzept jedoch auf 1-stufige Aufladeeinheiten oder 3- und mehrstufige Aufladeeinheiten angewandt werden. Die nachfolgenden Ansprüche werden dieser Verallgemeinerung gerecht.

### Bezugszeichenliste

- 2: Gehäusemantel
- 21: Öffnung im Gehäusemantel für Rotorblock des Niederdruck-Abgasturboladers
- 22: Öffnung im Gehäusemantel für Rotorblock des Hochdruck-Abgasturboladers
- 23: Ölablauf
- 24: Olzufuhr
- 25: Befestigungsflansch
- 26: Hohraum zwischen Gehäusemantel und Gehäusehülle
- 41, 42: Isolationselement, Teil der Isolierverschalung
- 45: Verbindungselemente, zum Verbinden der Isolationselemente
- 50: Kompensatorelement zwischen den Turbinen
- 110: Turbinengehäuse der Turbine des Niederdruck-Abgasturboladers
- 111: Gaseintritt der Turbine des Niederdruck-Abgasturboladers
- 112: Gasaustritt der Turbine des Niederdruck-Abgasturboladers
- 115: Turbinenrad des Niederdruck-Abgasturboladers
- 120: Spiralgehäuse des Verdichters des Niederdruck-Abgasturboladers
- 121: Lufteintritt des Verdichters des Niederdruck-Abgasturboladers (a, b)
- 122: Luftaustritt des Verdichters des Niederdruck-Abgasturboladers
- 123: Gehäusehülle des Verdichtergehäuses des Niederdruck-Abgasturboladers
- 124: Öffnung in der Gehäusehülle zum Einführen des Verdichterrades
- 125: Verdichterrad des Niederdruck-Abgasturboladers
- 126: Zentrale, durchgehende Öffnung im Spiralgehäuse
- 127: Hohlraum in der Gehäusehülle (Sammelraum für Lufteintritt)
- 128: Öffnung im Spiralgehäuse zum Abführen der Strömung aus dem Sprialgehäuse
- 130: Lagergehäuse des Niederdruck-Abgasturboladers
- 210: Turbinengehäuse der Turbine des Hochdruck-Abgasturboladers
- 211: Gaseintritt der Turbine des Hochdruck-Abgasturboladers
- 212: Gasaustritt der Turbine des Hochdruck-Abgasturboladers
- 215: Turbinenrad des Hochdruck-Abgasturboladers
- 220: Spiralgehäuse des Verdichters des Hochdruck-Abgasturboladers
- 221: Lufteintritt des Verdichters des Hochdruck-Abgasturboladers (a, b, c)
- 222: Luftaustritt des Verdichters des Hochdruck-Abgasturboladers
- 223: Gehäusehülle des Verdichtergehäuses des Hochdruck-Abgasturboladers
- 224: Öffnung in der Gehäusehülle zum Einführen des Verdichterrades
- 225: Verdichterrad des Hochdruck-Abgasturboladers
- 226: Zentrale, durchgehende Öffnung im Spiralgehäuse
- 227: Hohlraum in der Gehäusehülle (Sammelraum für Lufteintritt)
- 228: Öffnung im Spiralgehäuse zum Abführen der Strömung aus dem Spiralgehäuse
- 230: Lagergehäuse des Hochdruck -Abgasturboladers

## Patentansprüche

1. Gehäuse eines Radialverdichters, umfassend
eine einen Hohlraum (127, 227) umschliessende Gehäusehülle (123, 223), welche mehrere Seitenflächen aufweist, sowie
ein im Innern der Gehäusehülle (123, 223) angeordnetes Spiralgehäuse (120, 220) mit einer zentralen, durchgehenden Öffnung (126, 226) zur Aufnahme eines Verdichterrades und zum Zuführen von Luft aus dem Hohlraum (127, 227) auf ein in dieser Öffnung angeordnetes Verdichterrad und mit einer weiteren Öffnung (128) zum Abführen der Strömung aus dem Spiralgehäuse;
wobei in eine Seitenfläche der Gehäusehülle (123, 223) eine erste Öffnung zum Durchführen (21, 22) eines in dem Spiralgehäuse anzuordnenden Verdichterrades eingelassen ist,
wobei in eine Seitenfläche der Gehäusehülle (123, 223) eine zweite Öffnung zum Abführen der aus dem Spiralgehäuse geführten Strömung aus der Gehäusehülle eingelassen ist, und
wobei in mindestens eine Seitenfläche der Gehäusehülle eine dritte Öffnung (121, 121 a, 121b; 221, 221 a, 221 b, 221 c) zum Zuführen von Luft in den Hohlraum (127, 227) im Innern der Gehäusehülle eingelassen ist.

2. Gehäuse eines Radialverdichters nach Anspruch 1, wobei die durchgehende Öffnung (126, 226) im Spiralgehäuse in vertikaler Richtung verläuft und das Gehäuse folglich zur Aufnahme eines um eine vertikale Achse rotierenden Verdichters vorgesehen ist.

3. Gehäuse eines Radialverdichters nach einem der Ansprüche 1 oder 2, wobei sich das Spiralgehäuse (120, 220) und die Gehäusehülle (123, 223) eine Seitenwand teilen, wobei in diese gemeinsame Seitenwand eine Öffnung (124, 224) eingelassen ist, und in diese Öffnung in der gemeinsamen Seitenwand die zentrale, durchgehenden Öffnung (126, 226) des Spiralgehäuses mündet.

4. Gehäuse eines Radialverdichters nach einem der Ansprüche 1 bis 3, wobei in die Gehäusehülle mehrere dritte Öffnungen (121 a, 121 b; 221 a, 221 b, 221 c) zum Zuführen von Luft in den Hohlraum im Innern der Gehäusehülle in jeweils verschiedene Seitenflächen eingelassen sind.

5. Gehäuse eines Radialverdichters nach Anspruch 4, wobei zumindest eine der mehreren dritten Öffnungen (121a, 121b; 221 a, 221 b, 221 c) mit einem Deckel verschlossen ist.

6. Gehäusevorrichtung, umfassend ein Gehäuse eines Radialverdichters nach einem der Ansprüche 1 bis 5, wobei die Gehäusehülle (123, 223) von einem Gehäusemantel (2) umgeben ist, wobei sich zwischen dem Gehäusemantel und der Gehäusehülle ein zumindest teilweise mit Flüssigkeit beaufschlagter Hohlraum (26) erstreckt, und wobei die Öffnungen in der Gehäusehülle durch entsprechenden Öffnungen im Gehäusemantel aus dem Gehäusemantel hinausgeführt sind.

7. Gehäusevorrichtung, umfassend mehrere Gehäuse eines Radialverdichters nach einem der Ansprüche 1 bis 5, wobei die Gehäusehüllen (123, 223) gemeinsam von einem Gehäusemantel (2) umgeben sind, wobei sich zwischen dem Gehäusemantel und den Gehäusehüllen ein zumindest teilweise mit Flüssigkeit beaufschlagter Hohlraum (26) erstreckt, und wobei die Öffnungen in den Gehäusehüllen durch entsprechenden Öffnungen im Gehäusemantel aus dem Gehäusemantel hinausgeführt sind.

8. Abgasturbolader, umfassend einen vertikal angeordneten Rotor mit einem Turbinenrad (115, 215) und einem Verdichterrad (125, 225), wobei das Verdichterrad in einer Gehäusevorrichtung nach Anspruch 6 angeordnet ist.

9. Abgasturbolader nach Anspruch 8, wobei Flüssigkeit aus einem Lagerbereich des Rotors in den Hohlraum (26) zwischen dem Gehäusemantel (2) und der Gehäusehülle (123, 223) geführt ist, wobei die Flüssigkeit aufgrund der Schwerkraft über die Gehäusehülle (123, 223) abläuft.

10. Abgasturbolader nach Anspruch 8 oder 9, wobei das Gehäuse (110, 210) der Turbine vertikal oberhalb des Gehäusemantels (2) angeordnet ist, wobei eine auf dem Gehäusemantel aufgesetzte, mehrteilige Isolierverschalung (41, 42) das Turbinengehäuse (110, 210) vollständig umschliesst und eine Öffnung (211) zum Zuführen der heissen Abgase und eine Öffnung (112) zum Abführen der heissen Abgase freigibt.

11. Aufladegruppe, umfassend mehrere Abgasturbolader mit jeweils einem vertikal angeordneten Rotor mit jeweils einem Turbinenrad (115, 215) und einem Verdichterrad (125, 225), wobei die mehreren Verdichterräder in einer Gehäusevorrichtung nach Anspruch 7 angeordnet sind.

12. Aufladegruppe nach Anspruch 11, wobei Flüssigkeit aus einem Lagerbereich mindestens eines der Rotoren in den Hohlraum (26) zwischen dem Gehäusemantel (2) und der Gehäusehüllen (123, 223) geführt ist, wobei die Flüssigkeit aufgrund der Schwerkraft über die Gehäusehüllen (123, 223) abläuft.

13. Aufladegruppe nach einem der Ansprüche 11 oder 12, wobei die mehreren Abgasturbolader zu einem mehrstufigen Aufladesystem geschaltet sind, wobei Verdichter und Turbine zweier, aufeinanderfolgender Stufen jeweils in Serie geschaltet sind, so dass die Turbine der höheren Stufe der Turbine der tieferen Stufe vorgeschaltet und der Verdichter der höheren Stufe dem Verdichter der tieferen Stufe nachgeschaltet ist.

14. Aufladegruppe nach einem der Ansprüche 11 bis 13, wobei die Gehäuse der Turbinen (110, 210) vertikal oberhalb des Gehäusemantels (2) angeordnet sind, wobei eine auf dem Gehäusemantel (2) aufgesetzte, mehrteilige Isolierverschalung (41, 42) die Turbinengehäuse vollständig umschliesst und eine Öffnung (211) zum Zuführen der heissen Abgase und eine Öffnung (112) zum Abführen der heissen Abgase freigibt.

15. Gehäusemantel (2) eines Abgasturboladers nach einem der Ansprüche 8 bis 10 oder einer Aufladegruppe nach einem der Ansprüche 11 bis 14, wobei der Gehäusemantel einen Befestigungsflansch (25) zur Befestigung des Abgasturboladers beziehungsweise der Aufladegruppe an einer Brennkraftmaschine umfasst.

## Claims

1. Housing of a radial compressor, comprising
a housing casing (123, 223) which surrounds a cavity (127, 227) and which has multiple side surfaces, and a volute housing (120, 220) arranged in the interior of the housing casing (123, 223), said volute housing having a central through opening (126, 226) for accommodating a compressor wheel and for the supply of air from the cavity (127, 227) to a compressor wheel arranged in said opening, and having a further opening (128) for the discharge of the flow from the volute housing;
wherein, into a side surface of the housing casing (123, 223), there is formed a first opening (21, 22) for the leadthrough of a compressor wheel to be arranged in the volute housing,
wherein, into a side surface of the housing casing (123, 223), there is formed a second opening for the discharge, from the housing casing, of the flow conducted out of the volute housing, and
wherein, into at least one side surface of the housing casing, there is formed a third opening (121, 121a, 121b; 221, 221a, 221b, 221c) for the supply of air into the cavity (127, 227) in the interior of the housing casing.

2. Housing of a radial compressor according to Claim 1, wherein the through opening (126, 226) in the volute housing extends in a vertical direction, and the housing is consequently provided for accommodating a compressor that rotates about a vertical axis.

3. Housing of a radial compressor according to either of Claims 1 and 2, wherein the volute housing (120, 220) and the housing casing (123, 223) share a side wall, wherein an opening (124, 224) is formed into said common side wall, and the central through opening (126, 226) of the volute housing issues into said opening in the common side wall.

4. Housing of a radial compressor according to one of Claims 1 to 3, wherein, multiple third openings (121a, 121b; 221a, 221b, 221c) for the supply of air into the cavity in the interior of the housing casing are formed into the housing casing, into different side surfaces in each case.

5. Housing of a radial compressor according to Claim 4, wherein at least one of the multiple third openings (121a, 121b; 221a, 221b, 221c) is closed off by means of a cover.

6. Housing apparatus, comprising a housing of a radial compressor according to one of Claims 1 to 5, wherein the housing casing (123, 223) is surrounded by a housing jacket (2), wherein a cavity (26) which is at least partially filled with liquid extends between the housing jacket and the housing casing, and wherein the openings in the housing casing are led out of the housing jacket through corresponding openings in the housing jacket.

7. Housing apparatus, comprising multiple housings of a radial compressor according to one of Claims 1 to 5, wherein the housing casings (123, 223) are jointly surrounded by a housing jacket (2), wherein a cavity (26) which is at least partially filled with liquid extends between the housing jacket and the housing casings, and wherein the openings in the housing casings are led out of the housing jacket through corresponding openings in the housing jacket.

8. Exhaust-gas turbocharger comprising a vertically arranged rotor having a turbine wheel (115, 215) and a compressor wheel (125, 225), wherein the compressor wheel is arranged in a housing apparatus according to Claim 6.

9. Exhaust-gas turbocharger according to Claim 8, wherein liquid is conducted out of a bearing region of the rotor into the cavity (26) between the housing jacket (2) and the housing casing (123, 223), wherein the liquid runs down over the housing casing (123, 223) under the force of gravity.

10. Exhaust-gas turbocharger according to Claim 8 or 9, wherein the housing (110, 210) of the turbine is arranged vertically above the housing jacket (2), wherein a multi-part insulation shell arrangement (41, 42) which is fitted on the housing jacket completely surrounds the turbine housing (110, 210) and leaves free an opening (211) for the supply of the hot exhaust gases and an opening (112) for the discharge of the hot exhaust gases.

11. Supercharging assembly comprising multiple exhaust-gas turbochargers each with a vertically arranged rotor with in each case one turbine wheel (115, 215) and one compressor wheel (125, 225), wherein the multiple compressor wheels are arranged in a housing apparatus according to Claim 7.

12. Supercharging assembly according to Claim 11, wherein liquid is conducted out of a bearing region of at least one of the rotors into the cavity (26) between the housing jacket (2) and the housing casings (123, 223), wherein the liquid runs down over the housing casings (123, 223) under the force of gravity.

13. Supercharging assembly according to either of Claims 11 and 12, wherein the multiple exhaust-gas turbochargers are connected to form a multistage supercharging system, wherein the compressor and turbine of two successive stages are connected in each case in series, such that the turbine of the higher stage is positioned upstream of the turbine of the lower stage and the compressor of the higher stage is positioned downstream of the compressor of the lower stage.

14. Supercharging assembly according to one of Claims 11 to 13, wherein the housings of the turbines (110, 210) are arranged vertically above the housing jacket (2), wherein a multi-part insulation shell arrangement (41, 42) that is fitted on the housing jacket (2) completely surrounds the turbine housing and leaves free an opening (211) for the supply of the hot exhaust gases and an opening (112) for the discharge of the hot exhaust gases.

15. Housing jacket (2) of an exhaust-gas turbocharger according to one of Claims 8 to 10 or of a supercharging assembly according to one of Claims 11 to 14, wherein the housing jacket comprises a fastening flange (25) for the fastening of the exhaust-gas turbocharger or of the supercharging assembly, respectively, to an internal combustion engine.

## Revendications

1. Boîtier d'un compresseur radial, comprenant
une coque de boîtier (123, 223) entourant une cavité (127, 227), laquelle présente plusieurs surfaces latérales, et
une volute (120, 220) disposée à l'intérieur de la coque de boîtier (123, 223) avec une ouverture centrale traversante (126, 226) pour recevoir une roue de compresseur et pour acheminer de l'air provenant de la cavité (127, 227) à une roue de compresseur disposée dans cette ouverture et comprenant une ouverture supplémentaire (128) pour l'évacuation de l'écoulement hors de la volute ;
une première ouverture pour le passage (21, 22) d'une roue de compresseur devant être disposée dans la volute étant pratiquée dans la surface latérale de la coque de boîtier (123, 223),
une deuxième ouverture pour l'évacuation de l'écoulement guidé depuis la volute hors de la coque de boîtier étant pratiquée dans une surface latérale de la coque de boîtier (123, 223), et
une troisième ouverture (121, 121a, 121b ; 221, 221a, 221b, 221c) pour acheminer de l'air dans la cavité (127, 227) à l'intérieur de la coque de boîtier étant pratiquée dans au moins une surface latérale de la coque de boîtier.

2. Boîtier d'un compresseur radial selon la revendication 1, dans lequel l'ouverture traversante (126, 226) dans la volute s'étend dans la direction verticale et le boîtier est par conséquent prévu pour recevoir un compresseur tournant autour d'un axe vertical.

3. Boîtier d'un compresseur radial selon l'une quelconque des revendications 1 ou 2, dans lequel la virole (120, 220) et la coque de boîtier (123, 223) divisent une paroi latérale, une ouverture (124, 224) étant pratiquée dans cette paroi latérale commune et l'ouverture centrale traversante (126, 226) de la virole débouchant dans cette ouverture dans la paroi latérale commune.

4. Boîtier d'un compresseur radial selon l'une quelconque des revendications 1 à 3, dans lequel plusieurs troisièmes ouvertures (121a, 121b ; 221a, 221b, 221c) sont pratiquées dans la coque de boîtier à chaque fois dans différentes surfaces latérales pour acheminer de l'air dans la cavité à l'intérieur de la coque de boîtier.

5. Boîtier d'un compresseur radial selon la revendication 4, dans lequel au moins l'une des plusieurs troisièmes ouvertures (121a, 121b ; 221a, 221b, 221c) est fermée par un couvercle.

6. Dispositif de boîtier, comprenant un boîtier d'un compresseur radial selon l'une quelconque des revendications 1 à 5, dans lequel la coque de boîtier (123, 223) est entourée par une enveloppe de boîtier (2), une cavité (26) sollicitée au moins en partie avec du liquide s'étendant entre l'enveloppe de boîtier et la coque de boîtier et les ouvertures dans la coque de boîtier étant guidées hors de l'enveloppe de boîtier à travers des ouvertures correspondantes dans l'enveloppe de boîtier.

7. Dispositif de boîtier, comprenant plusieurs boîtiers d'un compresseur radial selon l'une quelconque des revendications 1 à 5, les coques de boîtier (123, 223) étant entourées en commun par une enveloppe de boîtier (2), une cavité (26) sollicitée au moins en partie avec du liquide s'étendant entre l'enveloppe de boîtier et les coques de boîtier, et les ouvertures dans la coque de boîtier étant guidées hors de l'enveloppe de boîtier à travers des ouvertures correspondantes dans l'enveloppe de boîtier.

8. Turbocompresseur à gaz d'échappement, comprenant un rotor disposé verticalement avec une roue de turbine (115, 215) et une roue de compresseur (125, 225), la roue de compresseur étant disposée dans un dispositif de boîtier selon la revendication 6.

9. Turbocompresseur à gaz d'échappement selon la revendication 8, dans lequel du liquide est guidé hors d'une région de palier du rotor dans la cavité (26) entre l'enveloppe de boîtier (2) et la coque de boîtier (123, 223), le liquide s'écoulant sous l'effet de la force de gravité par le biais de la coque de boîtier (123, 223).

10. Turbocompresseur à gaz d'échappement selon la revendication 8 ou 9, dans lequel le boîtier (110, 210) de turbine est disposé verticalement au-dessus de l'enveloppe de boîtier (2), un coffrage d'isolation en plusieurs parties (41, 42), posé sur l'enveloppe de boîtier, entourant complètement le boîtier de turbine (110, 210) et libérant une ouverture (211) pour acheminer les gaz d'échappement chauds et une ouverture (112) pour évacuer les gaz d'échappement chauds.

11. Groupe de suralimentation comprenant plusieurs turbocompresseurs à gaz d'échappement comprenant chacun un rotor disposé verticalement muni à chaque fois d'une roue de turbine (115, 215) et d'une roue de compresseur (125, 225), la pluralité de roues de compresseur étant disposée dans un dispositif de boîtier selon la revendication 7.

12. Groupe de suralimentation selon la revendication 11, dans lequel du liquide provenant d'une région de palier de l'un des rotors est guidé dans la cavité (26) entre l'enveloppe de boîtier (2) et les coques de boîtier (123, 223), le liquide s'écoulant sous l'effet de la force de gravité par le biais des coques de boîtier (123, 223).

13. Groupe de suralimentation selon l'une quelconque des revendications 11 ou 12, dans lequel la pluralité de turbocompresseurs à gaz d'échappement est branchée pour fournir un système de suralimentation à plusieurs étages, le compresseur et la turbine de deux étages successifs étant à chaque fois montés en série de sorte que la turbine de l'étage supérieur soit montée en amont de la turbine de l'étage inférieur et que le compresseur de l'étage supérieur soit monté en aval du compresseur de l'étage inférieur.

14. Groupe de suralimentation selon l'une quelconque des revendications 11 à 13, dans lequel les boîtiers de turbine (110, 210) sont disposés verticalement au-dessus de l'enveloppe de boîtier (2), un coffrage d'isolation en plusieurs parties (41, 42), posé sur l'enveloppe de boîtier (2) entourant complètement les boîtiers de turbine et libérant une ouverture (211) pour acheminer les gaz d'échappement chauds et une ouverture (112) pour évacuer les gaz d'échappement chauds.

15. Enveloppe de boîtier (2) d'un turbocompresseur à gaz d'échappement selon l'une quelconque des revendications 8 à 10 ou d'un groupe de suralimentation selon l'une quelconque des revendications 11 à 14, dans laquelle l'enveloppe de boîtier comprend une bride de fixation (25) pour la fixation du turbocompresseur à gaz d'échappement ou du groupe de suralimentation à un moteur à combustion interne.
